# FASCICULE DE BREVET EUROPEEN

(11) **EP 4 355 984 B1**
(45) Date de publication et mention de la délivrance du brevet: **20.08.2025**
(21) Numéro de dépôt: 21758725.2
(22) Date de dépôt: 13.06.2021
(51) Int. Cl.: F01D 25/18, B01D 19/00, F01D 25/20, F01M 11/00, F16N 39/00

(54) **RESERVOIR DE LUBRIFICATION POUR UNE TURBOMACHINE D'AERONEF OU D'ENGIN AERIEN AUTOPROPULSE**
SCHMIERTANK FÜR EINE FLUGZEUGSTURBOMACHINE ODER SELBSTFAHRENDES FLUGZEUG
LUBRICATION TANK FOR AN AIRCRAFT TURBOMACHINE OR SELF-PROPELLED AIRCRAFT EINGINE

(43) Date de publication de la demande: 24.04.2024
(73) Titulaire: Safran Power Units, 31200 Toulouse (FR)
(72) Inventeur: LHOMME, Victor Georges Maurice, 77550 MOISSY-CRAMAYEL (FR); GALIBERT, Franck Jean-Louis, 77550 MOISSY-CRAMAYEL (FR); GUYADER, Gilles Aimé Yann, 77550 MOISSY-CRAMAYEL (FR); MARTIN, Claire Madeleine, 77550 MOISSY-CRAMAYEL (FR)
(74) Mandataire: Gevers & Orès
(86) Numéro de dépôt international: PCT/FR2021/051054
(87) Numéro de publication internationale: WO 2022/263728

(56) Documents cités:
- EP-A1- 3 564 509
- FR-A1- 3 105 296
- GB-A- 1 339 825
- US-A- 3 016 912
- US-A1- 2011 315 484
- US-A1- 2014 174 093

## Description

### Domaine technique de l'invention

Le domaine technique de la présente invention est celui des réservoirs de lubrification pour des turbomachines d'aéronefs ou d'engins aériens autopropulsés, et plus particulièrement celui des réservoirs pouvant être soumis à des accélérations intervenant dans une direction et un sens différent des forces de gravitation. Par réservoir de lubrification, on entend un réservoir apte à contenir un liquide lubrifiant pour un système de lubrification de la turbomachine.

### Arrière-plan technique

Conventionnellement, les systèmes de lubrification des turbomachines comportent un réservoir de lubrifiant, tel que de l'huile, pour leur alimentation. Le réservoir comprend typiquement un carter agencé en un point bas de la turbomachine, selon une direction et un sens de la force de gravitation, et dans ce carter, une crépine dite d'aspiration, c'est-à-dire agencée en entrée d'un dispositif destiné à aspirer l'huile.

Dans la plupart des turbomachines, le retour d'huile est forcé par de l'air pressurisé. Le système de dégazage, c'est à dire de désaération, des réservoirs d'huile de turbomachine est généralement constitué d'un dégazeur tournant, aussi appelé désaérateur, qui est typiquement situé au centre du réservoir et qui permet d'évacuer l'air en excès dans l'huile tout en maintenant l'huile dans le réservoir et ainsi éviter de perdre de l'huile en fonctionnement.

Le document FR 2.687.329-B1 décrit et représente un dégazeur tournant comportant un bol tournant autour d'un axe et comportant à une première extrémité des aubes radiales sur lesquelles l'huile chargée en air est projetée et qui communique à une seconde extrémité avec un carter d'huile.

Dans le cas normal de fonctionnement de la turbomachine, c'est-à-dire avec une assiette nulle et le système de lubrification seulement soumis à la pesanteur, l'huile est localisée dans le carter d'huile. L'aspiration de l'huile vers une pompe du circuit de lubrification est effectuée au travers d'une crépine d'aspiration située au fond du carter d'huile.

Il est connu que les aéronefs ainsi que les engins aériens autopropulsés peuvent subir des accélérations latérales et/ou vers le haut, correspondant à des manœuvres ou à la traversée de turbulences. La durée de ces accélérations est généralement limitée dans le temps, mais les occurrences de ces accélérations sont multiples.

On a proposé des réservoirs permettant de garantir l'alimentation en huile de la pompe lorsque celle-ci est soumise à diverse accélérations. De tels réservoirs sont constitués d'une enceinte dont au moins une partie forme un carter d'huile et reçoit une crépine d'alimentation du circuit de lubrification de la turbomachine. Le carter d'huile peut présenter une forme adaptée pour que, en cas d'accélération latérale, la crépine d'aspiration reste immergée dans l'huile et ainsi garantir l'alimentation de la pompe à huile. De plus, le dégazeur tournant est généralement situé en position centrale au-dessus du carter d'huile pour éviter que la surface de l'huile ne vienne en contact avec le dégazeur tournant, afin de ne pas réduire l'efficacité de celui-ci.

De tels réservoirs peuvent également comporter une crépine située en un point haut de l'enceinte afin d'aspirer l'huile, en cas de retournement du réservoir, ou dans le cas où l'huile est soumise à une forte accélération verticale vers le haut. Un système de clapet, mécanique ou commandé électriquement, permet d'obturer la crépine qui est immergée dans l'huile afin d'éviter l'introduction d'air dans le circuit de lubrification. Le clapet peut par exemple être une bille qui se déplace avec la gravité ou un actionneur électrique commandé par un capteur de gravité.

La capacité de tels systèmes de lubrification à soutenir des accélérations latérales est donc conditionnée par la profondeur du carter d'huile du réservoir, afin qu'une quantité d'huile suffisante pour assurer l'immersion de la crépine y soit présente. Or, certaines contraintes d'intégration du réservoir dans son environnement ne permettent pas d'avoir un carter d'huile suffisamment profond, ce qui limite fortement la capacité du réservoir à soutenir des accélérations latérales.

Par ailleurs, lorsque la turbomachine est soumise à des accélérations purement latérales, le lubrifiant peut se retrouver confiné dans l'enceinte entre les deux crépines sans qu'aucune de celles-ci ne se retrouve immergée. En ce cas, la seule solution consiste à rajouter des crépines supplémentaires, et autant de clapets ou d'actionneurs correspondants, ce qui augmente la complexité d'un tel réservoir.

Un autre inconvénient d'un tel réservoir est qu'il nécessite une prise de mouvement pour actionner le dégazeur tournant. Or, la turbomachine ne peut pas toujours être équipée d'une telle prise de mouvement. En ce cas, l'usage d'un dispositif de dégazage statique devient impératif.

En outre, un tel réservoir comporte généralement au moins un évent destiné à évacuer l'air préalablement séparé de l'huile dudit réservoir. Cet évent est généralement placé dans une partie supérieure du réservoir. Il importe que cet évent ne puisse être submergé par de l'huile de lubrification en cas de retournement du réservoir, afin d'éviter qu'une quantité significative d'huile ne puisse être perdue, ce qui nuirait au fonctionnement global du système de lubrification, comme c'est le cas dans le document GB-1.339825-A.

Pour remédier à cet inconvenient, on a proposé dans le document US-2011/0315484-A1 d'équiper un réservoir de deux conduites d'évent coudées opposées verticalement et comportant chacune une entrée située au-dessus du niveau d'huile et une sortie en dessous du niveau d'huile. En cas de retournement du réservoir, la mise à l'air s'effectue par une conduite ou l'autre. Cette conception ne prend pas en compte les positions intermédiaires du réservoir et peut néanmoins permettre à de l'huile d'être évacuée par ces conduites, voire une obturation de celles-ci par l'huile.

De la même manière, un dispositif de dégazage statique est généralement placé en position haute du réservoir avec une sortie dirigée vers le bas du réservoir. De ce fait, un retournement du réservoir présente un risque élevé d'immersion du dispositif de dégazage par sa sortie, ce qui nuirait à son efficacité. Il importe donc que la sortie du dispositif de dégazage ne puisse être immergée.

### Résumé de l'invention

L'invention remédie à ces inconvénients en proposant un réservoir configuré pour éviter la submersion des évents et du dispositif de dégazage, quelle que soit l'accélération à laquelle le lubrifiant est soumis.

Dans ce but, l'invention propose un réservoir de lubrification pour une turbomachine d'aéronef ou d'engin aérien autopropulsé, comportant une enceinte contenant un lubrifiant, ladite enceinte comportant, en référence à une direction et un sens de la force de gravitation :
- dans une partie inférieure de ladite enceinte, une crépine d'aspiration qui est située au voisinage d'un fond de ladite enceinte et à laquelle est susceptible d'être reliée une conduite d'alimentation d'un circuit de lubrification de la turbomachine,
- dans une partie supérieure de ladite enceinte, au moins un dispositif de dégazage susceptible d'être alimenté en lubrifiant chargé d'air par une conduite de retour de lubrifiant de la turbomachine et de séparer le lubrifiant de l'air dans ladite enceinte,
- dans la partie supérieure de ladite enceinte, au moins un évent configuré pour évacuer l'air séparé du lubrifiant à l'extérieur de ladite enceinte,
caractérisé en ce qu'il comporte, pour permettre l'alimentation de la crépine et interdire l'intrusion de lubrifiant dans ledit au moins un évent lorsque le lubrifiant est soumis à des forces produites par des accélérations latérales et/ou une gravité négative :
- au moins une première cloison qui sépare la partie inférieure de la partie supérieure et qui est munie de passages aptes à permettre un écoulement du lubrifiant entre la partie inférieure et la partie supérieure,
- dans la partie supérieure, deux évents agencés de part et d'autre d'un plan médian vertical de l'enceinte,
- deux canalisations d'évents, qui comportent des extrémités supérieures de sortie communiquant avec les évents et qui s'étendent dans la partie supérieure jusqu'à des extrémités inférieures d'entrée débouchant dans le réservoir en dessous du dispositif de dégazage, chaque canalisation comportant un coude et ayant ledit coude et son extrémité supérieure de sortie situés de l'autre côté dudit plan médian par rapport à son extrémité inférieure d'entrée.

Selon d'autres caractéristiques du réservoir :
- la partie inférieure est divisée en un compartiment central et deux compartiments latéraux par deux secondes cloisons sensiblement verticales agencées de part et d'autre du plan médian vertical, qui s'étendent sensiblement entre un fond de la partie inférieure de l'enceinte et une extrémité supérieure fermée de ladite partie inférieure de l'enceinte, ledit compartiment central recevant la crépine, et la partie inférieure comportant des passages de lubrifiant entre le compartiment central et les compartiments latéraux,
- ladite au moins une première cloison comporte au droit de chaque compartiment latéral un tube qui s'étend à partir de ladite première cloison, qui plonge dans ledit compartiment latéral, et qui débouche au voisinage du fond de l'enceinte,
- le dispositif de dégazage est un dispositif de dégazage statique comportant un boîtier comportant une entrée alimentée en lubrifiant chargé d'air issu de la conduite de retour de lubrifiant, une sortie communiquant avec l'enceinte, et un élément métallique poreux disposé entre lesdites entrée et sortie,
- le coude de chaque conduit d'évent est agencé transversalement, par rapport au plan médian, à une distance supérieure à une distance transversale séparant son extrémité supérieure de sortie dudit plan médian, le coude formant sensiblement un angle obtu,
- le dispositif de dégazage est agencé transversalement entre les deux évents,
- le réservoir présente une forme sensiblement tubulaire annulaire configurée pour entourer un carter cylindrique de la turbomachine,
- le réservoir annulaire délimite un col circulaire et il comporte deux premières cloisons agencées dans le réservoir de part et d'autre dudit col,
- un tronçon de chaque conduit d'évent compris entre son extrémité inférieure d'entrée et son coude épouse le col du réservoir,

L'invention concerne aussi une turbomachine d'aéronef comportant au moins un réservoir d'huile de lubrification et au moins carter d'entrée d'air de ladite turbomachine, caractérisée en ce que le réservoir est un réservoir du type décrit précédemment et en ce qu'il entoure ledit carter d'entrée d'air.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique d'un circuit de fixation selon un état antérieur de la technique comportant un réservoir représenté soumis à l'apesanteur et avec une assiette nulle ;
[Fig.2] la figure 2 est une vue analogue à la figure 1 avec le réservoir représenté soumis à une accélération latérale ;
[Fig. 3] la figure 3 est une vue analogue à la figure 1 avec le réservoir représenté soumis à une accélération verticale vers le bas produisant une gravité négative ;
[Fig. 4] la figure 4 est une vue schématique d'un réservoir selon l'invention représenté soumis à la pesanteur et avec une assiette nulle ;
[Fig. 5] la figure 5 est une vue analogue à la figure 4 avec le réservoir représenté soumis à une accélération latérale;
[Fig. 6] la figure 6 est une vue analogue à la figure 4 avec le réservoir représenté soumis à une accélération verticale vers le bas produisant une gravité négative ;
[Fig. 7] la figure 7 est une vue analogue à la figure 4 avec le réservoir représenté soumis à une accélération latérale combinée à une accélération verticale vers le bas produisant une gravité négative;

### Description détaillée de l'invention

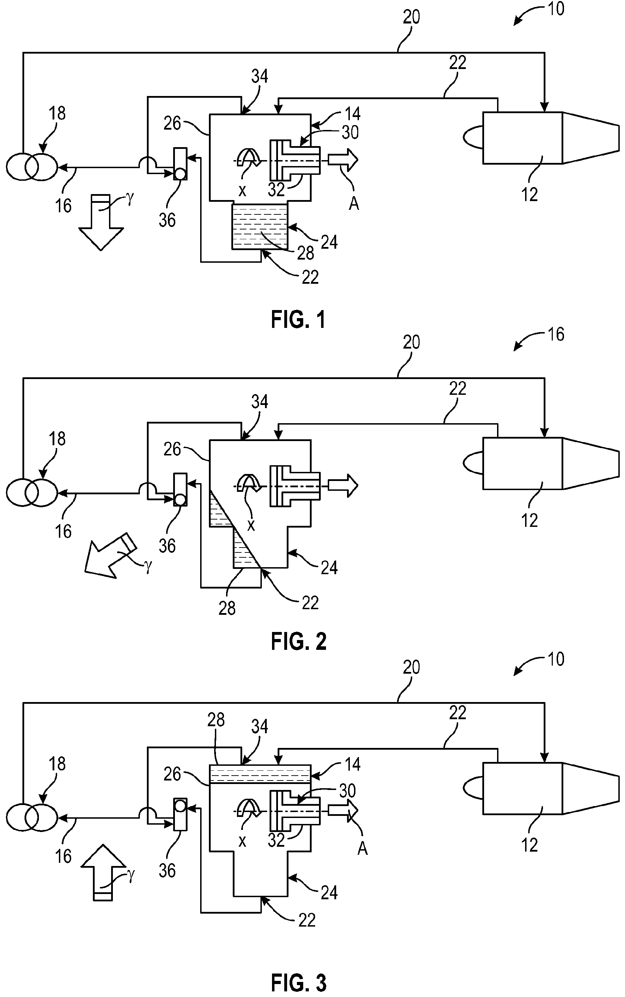

On a représenté sur les figures 1 à 3 un circuit 10 de lubrification pour une turbomachine d'aéronef ou d'engin aérien autopropulsé.

De manière connue, le circuit 10 est destiné à assurer la lubrification d'une turbomachine 12.

Le circuit 10 comporte, pour l'essentiel, un réservoir 14 qui alimente par l'intermédiaire d'une première conduite d'alimentation 16 une pompe 18 de lubrification qui alimente elle-même la turbomachine 12 par l'intermédiaire d'une seconde conduite d'alimentation 20.

Le circuit 10 est un circuit de lubrifiant en circuit fermé, de sorte qu'une conduite 22 de retour assure un retour du lubrifiant issu de la turbomachine 12 vers le réservoir 14 en vue de permettre son recyclage et sa réutilisation dans le circuit 10.

La première conduite d'alimentation 16 est reliée en un point bas 22 d'un carter 24 formé dans une enceinte 26 du réservoir 14 à une crépine dite d'aspiration (non représentée), qui dans un état normal du réservoir 14 tel qu'il a été représenté à la figure 1, c'est-à-dire à assiette nulle du réservoir 14 et en l'absence d'accélération autre que celle des forces de gravité, est immergée dans le lubrifiant 28.

Le lubrifiant provenant de la conduite de retour 22, qui a cheminé dans différentes enceintes sous pression à l'intérieur de la turbomachine 12, est généralement chargé de bulles d'air et il est nécessaire pour cela de le désaérer par l'intermédiaire d'un desaérateur ou dispositif de dégazage 30.

Un tel dispositif de dégazage 30 est largement connu de la technique et comporte pour l'essentiel un élément 32 tournant d'un axe X, comme l'illustre la flèche des figures1 à 3, qui permet de séparer le lubrifiant de l'air et d'évacuer l'air, représenté par une flèche A.

Il est connu d'équiper un tel réservoir 14 de moyens permettant d'assurer l'alimentation continue en lubrifiant de la première conduite 16.

Pour cela, le réservoir 14 est équipé d'une deuxième crépine d'aspiration de lubrifiant (non représentée) agencée en un point haut 34 de l'enceinte 26 à l'opposé du carter 24.

La première conduite d'alimentation 16 est également reliée à la crépine de ce point haut 34 par l'intermédiaire d'un dispositif d'inversion 36 qui permet de sélectionner, entre le point haut 22 et le point haut 34, la source d'alimentation en lubrifiant de la première conduite 16 en fonction de la position du lubrifiant dans l'enceinte 26.

Le dispositif d'inversion 36 peut consister, comme cela a été représenté sur les figures 1 à 3, en un clapet, distributeur à bille, ou un actionneur électrique commandé par un capteur de gravité.

Lorsque la turbomachine se trouve en l'absence d'accélération latérale ou longitudinale, c'est-à-dire lorsqu'elle est soumis uniquement à l'accélération gravitationnelle, la force γ qui résulte de l'accélération globale que subit la turbomachine est entièrement gravitationnelle, comme représenté par la flèche verticale de la figure 1. Le lubrifiant 28 contenu dans le carter 24 est aspiré par la crépine du point bas 22 en direction de la pompe 18, comme représenté à la figure 1.

Généralement, le carter 24 est dimensionné et présente des formes prévues pour que, lorsque la turbomachine est soumise à une accélération latérale combinée à l'accélération gravitationnelle qui produit une force résultante γ telle que représentée à la figure 2, la configuration du carter 24 permette au point bas 22 d'être maintenu immergé dans le lubrifiant 28, qui quitte alors en partie le carter 24 et se répand dans l'enceinte 26.

En cas de retournement du réservoir 14, ou lorsque celui-ci est soumis à une accélération verticale en sens inverse de la gravité, comme cela a été représenté par la flèche de la figure 3 symbolisant la direction de la force résultante γ, le lubrifiant n'est plus présent dans le carter 24 mais occupe la partie opposée de l'enceinte 26 et le point haut 34 est alors immergé dans le lubrifiant 28. Le dispositif d'inversion 36 est alors actionné pour alimenter la première conduite 16 à partir du point haut 34.

Cette configuration permet d'éviter en partie la rupture d'alimentation en lubrifiant de la première conduite 16. Toutefois, elle présente de nombreux inconvénients.

La capacité du réservoir 14 à soutenir des accélérations latérales est conditionnée par la profondeur et les formes du carter d'huile 24, afin de s'assurer qu'une quantité de lubrifiant suffisante est présente pour assurer l'immersion de la crépine du point bas 22. Or, certaines contraintes d'intégration du réservoir 14 dans son environnement ne permettent pas d'avoir un carter d'huile 24 suffisamment profond, ce qui limite fortement la capacité du réservoir 14 à soutenir des accélérations latérales.

Par ailleurs, lorsque la turbomachine 12 est soumise à des accélérations purement latérales, le lubrifiant 28 peut se retrouver confiné dans une partie intermédiaire de l'enceinte 26 entre les deux crépines des point bas 22 et haut 34 sans qu'aucune de ces crépines ne se retrouve immergée dans le lubrifiant 28. En ce cas, la seule solution pour éviter la rupture d'alimentation en lubrifiant consiste à rajouter des crépines supplémentaires sur les parois latérales de l'enceinte 26, et autant de clapets ou d'actionneurs correspondants, ce qui augmente la complexité d'un tel réservoir 14.

Un autre inconvénient d'un tel réservoir 14 est qu'il nécessite une prise de mouvement pour actionner le dispositif de dégazage 30 tournant. Or, en fonction du type de turbomachine 12, la turbomachine 12 ne peut pas toujours être équipée d'une telle prise de mouvement. En ce cas, l'usage d'un dispositif de dégazage statique devient impératif.

En outre, l'évacuation de l'air séparé de l'huile est ici réalisée au moyen d'un évent traversant le dispositif de dégazage tournant 30. Dans le cas où l'accélération latérale à laquelle est soumise le lubrifiant 28 le conduit à submerger le dispositif de dégazage tournant 30, le lubrifiant 28 peut être amené à quitter l'enceinte 26 et cette perte de lubrifiant peut être préjudiciable au bon fonctionnement du circuit de lubrification 10.

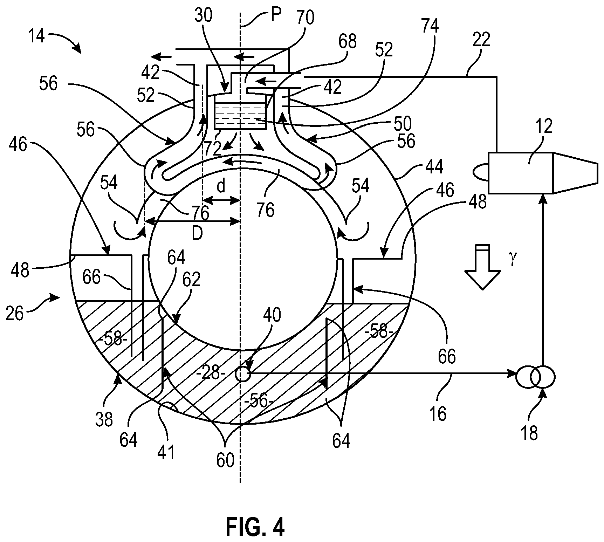

L'invention remédie à cet inconvénient en proposant un réservoir 14 évitant les ruptures d'alimentation en huile et la submersion de son ou ses évents. Un tel réservoir 14 a été représenté aux figures 4 à 7.

Le réservoir 14 de lubrification selon l'invention comporte comme précédemment une enceinte 26 recevant un lubrifiant 28. Ce réservoir 14 comporte, en référence à une direction et un sens de la force de gravitation, c'est-à-dire du haut vers le bas de la figure 4, dans une partie inférieure 38 de l'enceinte 26, une crépine d'aspiration 40 qui est située au voisinage d'un fond 41 de l'enceinte 26. À cette crépine 40 est susceptible d'être reliée une conduite d'alimentation 16 du circuit de lubrification de la turbomachine alimentant une pompe 18.

Dans une partie supérieure 44 de l'enceinte 26, le réservoir 14 comporte, comme précédemment, au moins un dispositif de dégazage 30 susceptible d'être alimenté en lubrifiant chargé d'air par une conduite de retour 22 de lubrifiant de la turbomachine afin de séparer le lubrifiant de l'air dans l'enceinte 26.

Dans la partie supérieure de l'enceinte 26, le réservoir 14 comporte au moins un évent 42 configuré pour évacuer l'air séparé du lubrifiant à l'extérieur de l'enceinte 26.

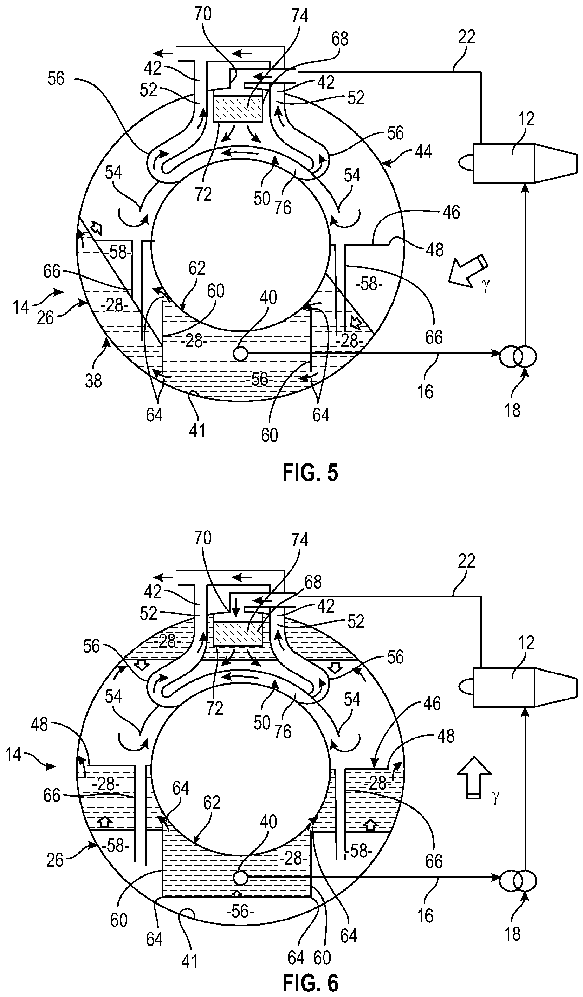

Conformément à l'invention, le réservoir 14 comporte, pour permettre l'alimentation de la crépine 40 et interdire l'intrusion de lubrifiant 28 dans l'évent 42 lorsque le lubrifiant 28 est soumis à des accélérations produisant des forces latérales ou des accélérations verticales γ en sens inverse de la gravité, comme cela est représenté aux figures 5 à 7, au moins une première cloison 46 qui sépare la partie inférieure 38 de la partie supérieure 44 et qui est comporte des passages 48. Ces passages 48 sont aptes à ralentir l'écoulement du lubrifiant lorsqu'il traverse la première cloison 46 en ayant été soumis à une force latérale et/ou verticale γ en sens inverse de la gravité, comme cela est représenté aux figures 5 à 7. Les passages 48, qui permettent en fonctionnement normal de participer au retour du lubrifiant séparé de l'air de la partie supérieure 44 vers la partie inférieure 38, permettent de ne laisser passer du lubrifiant qu'avec un débit réduit, ce qui garantit la présence de lubrifiant 28 autour de la crépine 40 dans toutes les positions du réservoir 14.

Les passages 48 peuvent à cet effet être réalisés sous la forme de perçages ou d'orifices calibrés formés dans la première cloison 46. Ils peuvent aussi être constitués de jeux formés entre tout ou partie des bords de la première cloison 46 et une paroi adjacente de l'enceinte 26. Ces jeux sont calibrés et délimitent entre la première cloison 46 et la paroi adjacente des fenêtres de passage de lubrifiant qui permettent de ne laisser passer du lubrifiant qu'avec un débit réduit.

Ainsi, lorsque le réservoir 14 est soumis à une accélération qui produit une force résultante γ présentant une composante verticale orientée vers le haut comme cela est représenté aux figures 5 à 7, il subsiste suffisamment de lubrifiant 28 autour de la crépine 40 pour assurer l'alimentation du circuit de lubrification.

Le réservoir 14 comporte également dans la partie supérieure 44, deux évents 42 agencés de part et d'autre d'un plan médian vertical P de l'enceinte 26.

Avantageusement, le réservoir 14 comporte également deux canalisations d'évents 50, qui comportent dans la partie supérieure 44 des extrémités supérieures de sortie 52 communiquant avec les évents 42. Ces canalisations d'évents 50 s'étendent dans la partie supérieure 44 jusqu'à des extrémités inférieures d'entrée 54 libres de ces canalisations 50, qui débouchent dans le réservoir 14 en dessous du dispositif de dégazage 30.

Cette configuration permet notamment d'éviter en cas de retournement du réservoir 14, que les extrémités inférieures d'entrée 54 des canalisations 50 ne soient submergées par le lubrifiant 28, comme représenté à la figure 6, ce qui permet d'assurer la ventilation du réservoir 14 sans risque de perte du lubrifiant 28.

Avantageusement, chaque canalisation 50 comporte un coude 56. Chaque coude 56 et l'extrémité supérieure de sortie 52 de la canalisation d'évent 50 sont situés de l'autre côté du plan médian P par rapport à son l'extrémité inférieure d'entrée libre 54 de la même canalisation 50.

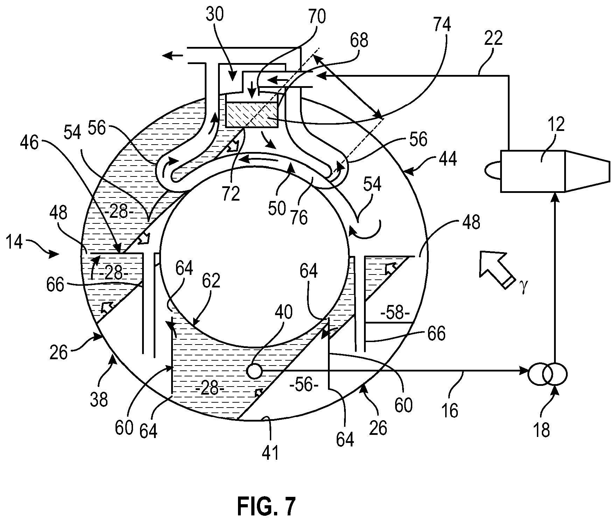

Cette configuration est particulièrement avantageuse, car lorsque le lubrifiant 28 est soumis à une accélération ayant une composante latérale entraînant l'accumulation du lubrifiant 28 d'un côté de l'enceinte 26 comme représenté à la figure 7, il est ainsi garanti que la mise à l'air du réservoir 26 par l'évent 42 qui se trouve du côté de l'accumulation de lubrifiant 28 est néanmoins assurée puisque l'extrémité libre 54 de la canalisation d'évent 50 se trouve du côté opposé.

Ces caractéristiques correspondent à une configuration de base du réservoir 14 qui peut toutefois être perfectionnée.

Ainsi avantageusement, la partie inférieure 38 est divisée en un compartiment central 56 et deux compartiments latéraux 58 par deux secondes cloisons 60 sensiblement verticales agencées de part et d'autre du plan médian vertical P. Ces secondes cloisons 60 s'étendent sensiblement verticalement entre le fond 41 de la partie inférieure 38 de l'enceinte 26 et une extrémité supérieure fermée de cette partie inférieure 38 de l'enceinte 26.

Dans le cas d'espèce qui a été représenté ici, le réservoir 14 présente une forme sensiblement tubulaire annulaire configurée qui est prévue pour entourer un carter cylindrique d'une turbomachine, par exemple un carter d'entrée d'air de la turbomachine. Le réservoir 14 annulaire délimite donc un col circulaire 62, qui peut être formé par ce carter d'entrée d'air, et l'extrémité supérieure fermée de la partie inférieure 38 de l'enceinte 26 est fermée par le col circulaire 62 et les deux premières cloisons 46 qui forment une continuité.

Les deux premières cloisons 46 sont ici préférentiellement agencées dans le réservoir 26 de part et d'autre du col 62 afin de garantir un volume adéquat de lubrifiant 28.

Il sera compris que la forme du réservoir 14 n'est ici pas limitative de l'invention et que le réservoir pourrait ne pas présenter de forme annulaire et être dépourvu de col 62. En ce cas, le réservoir 14 ne comporterait qu'une seule première cloison 46 qui s'étendrait transversalement suivant toute la largeur du réservoir 14 et fermerait toute l'extrémité supérieure de la partie inférieure 38 de l'enceinte 26.

La partie inférieure 38 est divisée de manière que le compartiment central 56 et que les deux compartiments 58 qui sont agencés de part et d'autre du compartiment central 58 puissent échanger avec un débit réduit du lubrifiant 28 avec le compartiment central 56.

À cet effet, la partie inférieure 38 comporte des passages 64 de lubrifiant calibrés permettant le passage de lubrifiant entre le compartiment central 56 et les compartiments latéraux 58.

Ces passages 64 peuvent être agencés, à titre d'exemple et de manière non limitative de l'invention, aux extrémités supérieures et inférieures des secondes cloisons 60.

En variante, les extrémités supérieures et inférieures des secondes cloisons 60 pouraient être jointives avec le col 62 et le fond 41 de l'enceinte 26 et les passages pourraient être délimités entre le réservoir et des extrémités axiales des secondes cloisons 60.

Le rôle de ces passages 64 est double. Ils permettent, d'une part, d'assurer le retour du lubrifiant 28 débarrassé de l'air de la partie supérieure 44 vers le compartiment central 56 après avoir traversé les compartiments latéraux 58, et d'autre part, de limiter les pertes de lubrifiant 28 du compartiment central 56 vers les compartiments 58 lorsque le réservoir est soumis à des forces γ d'orientation verticale en sens inverse de la gravité ou latérale comme cela est représenté aux figures 5 à 7. En effet, l'interposition des compartiments latéraux 58 entre le compartiment central 56 et la partie supérieure 44 forme des chicanes aptes à ralentir l'écoulement du lubrifiant 28.

Avantageusement, quelle que soit la forme du réservoir 14, chaque première cloison 46 comporte au droit de chaque compartiment latéral 58 un tube 66 qui s'étend à partir de cette première cloison 46, qui plonge dans le compartiment latéral 58, et qui débouche au voisinage du fond 41 de l'enceinte 26. Dans le cas qui a été représenté ici, le réservoir 14 comporte donc deux tubes 66, soit un tube 66 au droit de chaque compartiment latéral 58.

Le rôle de chaque tube 66 est de permettre le retour du lubrifiant 28 séparé par le dispositif de dégazage 30 tout en évitant le passage de lubrifiant des compartiments latéraux 58 vers la partie supérieure 44 de l'enceinte 26 en cas de retournement, puisque l'extrémité libre des tubes 66 se retrouve alors au-dessus du niveau du lubrifiant 28 dans les compartiments latéraux 58 comme cela est représenté aux figures 6 et 7.

Une autre configuration particulièrement avantageuse de l'invention est que le dispositif de dégazage 30 est un dispositif de dégazage statique qui ne nécessite pas de prise de mouvement sur la turbomachine qui est alimenté par le réservoir 14. À cet effet, le dispositif de dégazage 30 comporte un boîtier 68 comportant une entrée 70 alimentée en lubrifiant chargé d'air issu de la conduite 22 de retour de lubrifiant, une sortie 72 communiquant avec l'enceinte 26, et un élément métallique 74 poreux disposé entre ces entrée 70 et sortie 72.

À titre d'exemple, et de manière non limitative de l'invention, l'élément métallique 74 peut être constitué d'une mousse métallique. Le dispositif de dégazage 30 est ici agencé transversalement entre les deux évents 42.

Avantageusement, pour éviter absolument l'intrusion de lubrifiant 28 dans les conduits d'évents 50, le coude 56 de chaque conduit d'évent 50 est agencé transversalement, par rapport au plan médian P, à une distance D supérieure à une distance d transversale séparant son extrémité supérieure de sortie 52 dudit plan médian P. Dans cette configuration, le coude 56 forme sensiblement un angle obtu en forme d'épingle à cheveux qui ralentit un éventuel le passage du lubrifiant vers les évents 42.

Dans la configuration de réservoir annulaire 14 qui a été représentée ici, un tronçon 76 de chaque conduit d'évent 50 compris entre son extrémité inférieure d'entrée libre 54 et son coude 56 épouse le col 62 du réservoir 14.

La forme particulière du réservoir annulaire 14 qui a été représenté ici trouve particulièrement à s'appliquer à une disposition du réservoir 14 autour d'une turbomachine comportant un carter d'entrée d'air (non représentée) qui est par définition une zone froide de la turbomachine. Ainsi le col 62 fournit une surface d'échange avec le carter d'entrée d'air de la turbomachine, ce qui permet le refroidissement du réservoir 14 et par conséquent celui de tout le lubrifiant 28.

Il convient en cela de noter que le col 62 du réservoir 14 pourrait être directement constitué du carter de la turbomachine.

On pourra également envisager que le col 62 soit pourvu à l'intérieur de l'enceinte 26 de surfaces d'échange tel que des ailettes permettant d'assurer le refroidissement de l'intérieur de l'enceinte 26.

L'invention permet donc d'améliorer sensiblement les performances d'un réservoir de lubrification comprenant un dispositif de dégazage.

## Revendications

1. Réservoir (14) de lubrification pour une turbomachine d'aéronef ou d'engin aérien autopropulsé, comportant une enceinte (26) contenant un lubrifiant (28), ladite enceinte (26) comportant, en référence à une direction et un sens de la force de gravitation :
- dans une partie inférieure (38) de ladite enceinte (26), une crépine d'aspiration (40) qui est située au voisinage d'un fond (41) de ladite enceinte (26) et à laquelle est susceptible d'être reliée une conduite (16) d'alimentation d'un circuit de lubrification de la turbomachine,
- dans une partie supérieure (44) de ladite enceinte (26), au moins un dispositif de dégazage (30) susceptible d'être alimenté en lubrifiant (28) chargé d'air par une conduite (22) de retour de lubrifiant de la turbomachine et de séparer le lubrifiant de l'air dans ladite enceinte (26),
- dans la partie supérieure (44) de ladite enceinte (26), au moins un évent (42) configuré pour évacuer l'air séparé du lubrifiant à l'extérieur de ladite enceinte (26),
**caractérisé en ce qu'**il comporte, pour permettre l'alimentation de la crépine (40) et interdire l'intrusion de lubrifiant (28) dans ledit au moins un évent (42) lorsque le lubrifiant est soumis à des forces (γ) produites par des accélérations latérales et/ou une gravité négative :
- au moins une première cloison (46) qui sépare la partie inférieure (38) de la partie supérieure (44) et qui est munie de passages (48) aptes à permettre un écoulement du lubrifiant (28) entre la partie inférieure (38) et la partie supérieure (44),
- dans la partie supérieure (44), deux évents (42) agencés de part et d'autre d'un plan médian vertical (P) de l'enceinte (26),
- deux canalisations (50) d'évents, qui comportent des extrémités supérieures de sortie (52) communiquant avec les évents (42) et qui s'étendent dans la partie supérieure (44) jusqu'à des extrémités inférieures d'entrée (54) débouchant dans le réservoir (14) en dessous du dispositif de dégazage (30), chaque canalisation (50) comportant un coude (56) et ayant ledit coude (56) et son extrémité supérieure de sortie (52) situés de l'autre côté dudit plan médian (P) par rapport à son extrémité inférieure d'entrée (54) .

2. Réservoir (14) selon la revendication précédente, **caractérisé en ce que** la partie inférieure (38) est divisée en un compartiment central (56) et deux compartiments latéraux (58) par deux secondes cloisons (60) sensiblement verticales agencées de part et d'autre du plan médian vertical (P), qui s'étendent sensiblement entre un fond (41) de la partie inférieure de l'enceinte (44) et une extrémité supérieure fermée de ladite partie inférieure (38) de l'enceinte (26), ledit compartiment central (56) recevant la crépine, et la partie inférieure (38) comportant des passages de lubrifiant entre le compartiment central (56) et les compartiments latéraux (58).

3. Réservoir (14) selon la revendication précédente **caractérisé en ce que** ladite au moins une première cloison (46) comporte au droit de chaque compartiment latéral (58) un tube (66) qui s'étend à partir de ladite première cloison (46), qui plonge dans ledit compartiment latéral (58), et qui débouche au voisinage du fond (41) de l'enceinte (26).

4. Réservoir (14) selon l'une des revendications précédentes, **caractérisé en ce que** le dispositif de dégazage (30) est un dispositif de dégazage statique comportant un boîtier (68) comportant une entrée (70) alimentée en lubrifiant chargé d'air issu de la conduite de retour de lubrifiant, une sortie (72) communiquant avec l'enceinte (44), et un élément métallique poreux (74) disposé entre lesdites entrée et sortie.

5. Réservoir (14) selon l'une des revendications précédentes, **caractérisé en ce que** le coude (56) de chaque conduit d'évent (50) est agencé transversalement, par rapport au plan médian (P), à une distance (D) supérieure à une distance transversale (d) séparant son extrémité supérieure de sortie (52) dudit plan médian (P), le coude (56) formant sensiblement un angle obtu.

6. Réservoir (14) selon l'une des revendications précédentes, **caractérisé en ce que** le dispositif de dégazage (30) est agencé transversalement entre les deux évents (42).

7. Réservoir (14) selon l'une des revendications précédentes, **caractérisé en ce qu'**il présente une forme sensiblement tubulaire annulaire configurée pour entourer un carter cylindrique de la turbomachine.

8. Réservoir (14) selon la revendication précédente **caractérisé en ce que** le réservoir annulaire délimite un col circulaire (62) et **en ce qu'**il comporte deux premières cloisons (46) agencées dans le réservoir de part et d'autre dudit col (62).

9. Réservoir (14) selon la revendication précédente, **caractérisé en ce qu'**un tronçon (76) de chaque conduit d'évent (50) compris entre son extrémité inférieure d'entrée (54) et son coude (56) épouse le col (62) du réservoir.

10. Turbomachine d'aéronef ou d'engin aérien autopropulsé, comportant au moins un réservoir d'huile de lubrification et au moins carter d'entrée d'air de ladite turbomachine, **caractérisée en ce que** le réservoir (14) est un réservoir selon l'une des revendications 7 à 9 et **en ce qu'**il entoure ledit carter d'entrée d'air.

## Patentansprüche

1. Schmiermitteltank (14) für ein Turbotriebwerk eines Flugzeugs oder eines selbstangetriebenen Luftfahrzeugs, der einen Behälter (26) umfasst, der ein Schmiermittel (28) enthält, wobei der Behälter (26) in Bezug auf eine Richtung und eine Ausrichtung der Schwerkraft umfasst:
- in einem unteren Teil (38) des Behälters (26) einen Ansaugfilter (40), der sich in der Nähe eines Bodens (41) des Behälters (26) befindet und an den eine Versorgungsleitung (16) eines Schmiermittelkreislaufs des Turbotriebwerks angeschlossen werden kann,
- in einem oberen Teil (44) des Behälters (26) mindestens eine Vorrichtung (30) zum Entgasen, die über eine Schmiermittelrückführleitung (22) des Turbotriebwerks mit luftbeladenen Schmiermittel (28) versorgt werden kann, und zum Abtrennen des Schmiermittels von der Luft in dem Behälter (26),
- im oberen Teil (44) des Behälters (26) mindestens eine Entlüftungsöffnung (42), die dafür konfiguriert ist, die vom Schmiermittel abgetrennte Luft zur Außenseite des Behälters (26) abzuführen,
**dadurch gekennzeichnet, dass** er, um die Versorgung des Filters (40) zu ermöglichen und das Eindringen von Schmiermittel (28) in die mindestens eine Entlüftungsöffnung (42) zu verhindern, wenn das Schmiermittel Kräften (γ) ausgesetzt ist, die durch seitliche Beschleunigungen und/oder eine negative Schwerkraft erzeugt werden, umfasst:
- mindestens eine erste Trennwand (46), die den unteren Teil (38) vom oberen Teil (44) trennt und die mit Durchlässen (48) versehen ist, die in der Lage sind, ein Abfließen des Schmiermittels (28) zwischen dem unteren Teil (38) und dem oberen Teil (44) zu ermöglichen,
- im oberen Teil (44) zwei Entlüftungsöffnungen (42), die beiderseits einer vertikalen Mittelebene (P) des Behälters (26) angeordnet sind,
- zwei Entlüftungskanäle (50), die obere Auslassenden (52) umfassen, die mit den Entlüftungsöffnungen (42) kommunizieren und die sich im oberen Teil (44) bis zu unteren Einlassenden (54) erstrecken, die unterhalb der Entgasungsvorrichtung (30) in den Tank (14) münden, wobei jeder Kanal (50) einen Krümmer (56) umfasst und der Krümmer (56) und sein oberes Auslassende (52) sich in Bezug auf sein unteres Einlassende (54) auf der anderen Seite der Mittelebene (P) befinden.

2. Tank (14) nach dem vorstehenden Anspruch, **dadurch gekennzeichnet, dass** der untere Teil (38) durch zwei zweite, im Wesentlichen vertikale Trennwände (60), die beiderseits der vertikalen Mittelebene (P) angeordnet sind, die sich im Wesentlichen zwischen einem Boden (41) des unteren Teils der Kammer (44) und einem geschlossenen oberen Ende des unteren Teils (38) der Kammer (26) erstrecken, in eine mittlere Kammer (56) und zwei seitliche Kammern (58) unterteilt ist, wobei die mittlere Kammer (56) den Filter aufnimmt und der untere Teil (38) Schmiermitteldurchlässe zwischen der mittleren Kammer (56) und den seitlichen Kammern (58) umfasst.

3. Tank (14) nach dem vorstehenden Anspruch, **dadurch gekennzeichnet, dass** die mindestens eine erste Trennwand (46) an jeder seitlichen Kammer (58) ein Rohr (66) umfasst, das sich von der ersten Trennwand (46) erstreckt, das in die seitliche Kammer (58) eintaucht und das in der Nähe des Bodens (41) der Kammer (26) mündet.

4. Tank (14) nach einem der vorstehenden Ansprüche, **dadurch gekennzeichnet, dass** die Entgasungsvorrichtung (30) eine statische Entgasungsvorrichtung ist, die ein Gehäuse (68) umfasst, das einen Einlass (70), der mit luftbeladenem Schmiermittel aus der Schmiermittelrückführleitung versorgt wird, einen Auslass (72), der mit dem Behälter (44) kommuniziert, und ein poröses Metallelement (74) umfasst, das zwischen dem Einlass und dem Auslass angeordnet ist.

5. Tank (14) nach einem der vorstehenden Ansprüche, **dadurch gekennzeichnet, dass** der Krümmer (56) jeder Entlüftungsleitung (50) quer in Bezug auf die Mittelebene (P) in einem Abstand (D) angeordnet ist, der größer ist als ein Querabstand (d), der sein oberes Auslassende (52) von der Mittelebene (P) trennt, wobei der Krümmer (56) im Wesentlichen einen stumpfen Winkel bildet.

6. Tank (14) nach einem der vorstehenden Ansprüche, **dadurch gekennzeichnet, dass** die Entgasungsvorrichtung (30) quer zwischen den zwei Entlüftungsöffnungen (42) angeordnet ist.

7. Tank (14) nach einem der vorstehenden Ansprüche, **dadurch gekennzeichnet, dass** er eine im Wesentlichen ringförmige, rohrförmige Form aufweist, die so konfiguriert ist, dass sie ein zylindrisches Kasten des Turbotriebwerks umgibt.

8. Tank (14) nach dem vorstehenden Anspruch, **dadurch gekennzeichnet, dass** der ringförmige Tank einen kreisförmigen Hals (62) begrenzt und dass er zwei erste Trennwände (46) umfasst, die im Tank beiderseits des Halses (62) angeordnet sind.

9. Tank (14) nach dem vorstehenden Anspruch, **dadurch gekennzeichnet, dass** sich ein Abschnitt (76) jeder Entlüftungsleitung (50) zwischen seinem unteren Einlassende (54) und seinem Krümmer (56) an den Hals (62) des Tanks anschmiegt.

10. Turbotriebwerk für ein Flugzeug oder ein selbstangetriebenes Luftfahrzeug, das mindestens einen Schmieröltank und mindestens ein Lufteinlasskasten des Turbotriebwerks umfasst, **dadurch gekennzeichnet, dass** der Tank (14) ein Tank nach einem der Ansprüche 7 bis 9 ist und dass er das Lufteinlasskasten umgibt.

## Claims

1. A lubrication reservoir (14) for a turbine engine for an aircraft or self-propelled flying machine, comprising an enclosure (26) containing a lubricant (28), said enclosure (26) comprising, with reference to a direction and an orientation of the gravitational force:
- in a lower part (38) of said enclosure (26), a suction strainer (40) which is located in the vicinity of a bottom (41) of said enclosure (26) and to which a supply duct (16) of a lubrication circuit of the turbine engine can be connected,
- in an upper part (44) of said enclosure (26), at least one degassing device (30) capable of being supplied with air-laden lubricant (28) via a lubricant return duct (22) from the turbine engine and of separating the lubricant from the air in said enclosure (26),
- in the upper part (44) of said enclosure (26), at least one vent (42) configured to evacuate the air separated from the lubricant outside said enclosure (26),
**characterised in that** it comprises, to allow the strainer (40) to be supplied and to prevent the intrusion of lubricant (28) into said at least one vent (42) when the lubricant is subjected to forces (γ) produced by lateral accelerations and/or a negative gravity:
- at least one first partition (46) which separates the lower part (38) from the upper part (44) and which is equipped with passages (48) capable of allowing the lubricant (28) to flow between the lower part (38) and the upper part (44),
- in the upper part (44), two vents (42) arranged on either side of a vertical median plane (P) of the enclosure (26),
- two vent pipes (50), which comprise upper outlet ends (52) communicating with the vents (42) and which extend in the upper part (44) as far as lower inlet ends (54) opening into the reservoir (14) below the degassing device (30), each pipe (50) comprising a bend (56) and having said bend (56) and its upper outlet end (52) located on the other side of said median plane (P) relative to its lower inlet end (54).

2. The reservoir (14) according to the preceding claim, **characterised in that** the lower part (38) is divided into a central compartment (56) and two lateral compartments (58) by two second substantially vertical partitions (60) arranged on either side of the vertical median plane (P), which extend substantially between a bottom (41) of the lower part of the enclosure (44) and a closed upper end of said lower part (38) of the enclosure (26), said central compartment (56) receiving the strainer, and the lower part (38) comprising lubricant passages between the central compartment (56) and the lateral compartments (58).

3. The reservoir (14) according to the preceding claim, **characterised in that** said at least one first partition (46) comprises, in line with each lateral compartment (58), a tube (66) which extends from said first partition (46), which dips into said lateral compartment (58), and which opens out in the vicinity of the bottom (41) of the enclosure (26).

4. The reservoir (14) according to one of the preceding claims, **characterised in that** the degassing device (30) is a static degassing device comprising a housing (68) comprising an inlet (70) supplied with air-laden lubricant from the lubricant return duct, an outlet (72) communicating with the enclosure (44), and a porous metallic element (74) arranged between said inlet and outlet.

5. The reservoir (14) according to one of the preceding claims, **characterised in that** the bend (56) of each vent duct (50) is arranged transversely, with respect to the median plane (P), at a distance (D) greater than a transverse distance (d) separating its upper outlet end (52) from said median plane (P), the bend (56) forming substantially an obtuse angle.

6. The reservoir (14) according to one of the preceding claims, **characterised in that** the degassing device (30) is arranged transversely between the two vents (42).

7. The reservoir (14) according to one of the preceding claims, **characterised in that** it has a substantially annular tubular shape configured to surround a cylindrical casing of the turbine engine.

8. The reservoir (14) according to the preceding claim, **characterised in that** the annular reservoir defines a circular neck (62) and **in that** it comprises two first partitions (46) arranged in the reservoir on either side of said neck (62).

9. The reservoir (14) according to the preceding claim, **characterised in that** a stretch (76) of each vent duct (50) between its lower inlet end (54) and its bend (56) matches the neck (62) of the reservoir.

10. A turbine engine for an aircraft or self-propelled flying machine, comprising at least one lubricating oil reservoir and at least one air inlet casing of said turbine engine, **characterised in that** the reservoir (14) is a reservoir according to one of claims 7 to 9 and **in that** it surrounds said air inlet casing.
